# EUROPÄISCHE PATENTSCHRIFT

(11) **EP 2 396 254 B1**
(45) Veröffentlichungstag und Bekanntmachung des Hinweises auf die Patenterteilung: **09.04.2014**
(21) Anmeldenummer: 10704497.6
(22) Anmeldetag: 26.01.2010
(51) Int. Cl.: B65G 45/00, B65G 13/11, B65G 21/00

(54) **ROLLENBAHN ZUM TRANSPORT VON GEGENSTÄNDEN**
ROLLER CONVEYOR FOR TRANSPORTING ITEMS
CHEMIN DE ROULEMENT POUR LE TRANSPORT D'OBJETS

(30) Priorität: 13.02.2009 DE 102009008938
(43) Veröffentlichungstag der Anmeldung: 21.12.2011
(73) Patentinhaber: Smiths Heimann GmbH, 65205 Wiesbaden (DE)
(72) Erfinder: KAILER, Oliver, 65527 Niedernhausen (DE)
(74) Vertreter: Greif, Thomas
(86) Internationale Anmeldenummer: PCT/EP2010/000445
(87) Internationale Veröffentlichungsnummer: WO 2010/091781

(56) Entgegenhaltungen:
- WO-A1-00/46133
- WO-A1-2007/061331
- US-A- 5 078 250
- US-A- 6 000 529

## Beschreibung

Die Erfindung betrifft eine Rollenbahn zum Transport von Gegenständen nach dem Oberbegriff des Anspruchs 1 sowie ein Kontrollstation zur Überprüfung von Gegenständen nach dem Oberbegriff des Anspruchs 7.

Derartige Rollenbahnen sind beispielsweise in der WO 00/46133 beschrieben Sie werden bekannterweise vielfach an Kontrollstationen, beispielsweise Passagierkontrollstationen in Flughäfen, zur Beförderung von Gegenständen wie Gepäckstücke durch Prüfgeräte eingesetzt. Das Dokument US 5 078 250 offenbart eine Rollenbahn zum Transport von Gegenständen nach dem Oberbegriff des Anspruchs 1. Die üblicherweise eingesetzten Rollenbahnen haben die Nachteile, dass kleine Gegenstände zwischen den Transportrollen durchfallen können und dass die unterhalb der Rollenbahn angeordnete Mechanik zwlschen den Transportrollen sichtbar ist. Letzteres ist insbesondere an Stellen mit Publikumsverkehr nicht erwünscht.

Um diese Nachteile zu vermeiden, ist es bekannt, die Rollenbahnen an ihrer Unterseite mit festen Verkleidungen zu versehen, die beispielsweise aus Metall oder Kunststoff sind. Dies führt jedoch zu folgenden Nachteilen:
- Die dazu erforderlichen festen Platten aus Metall oder Kunststoff sind mechanisch schwierig einzubauen und zu befestigen,
- durch die großen Verkleidungsflächen können Schwingungen und Resonanzen entstehen, von denen die mechanischen Laufgeräusche verstärkt werden,
- fällt ein Gegenstand zwischen den Rollen hindurch und eine Person versucht danach zu greifen, so besteht Verletzungsgefahr, falls die Hand zwischen eine Transportrolle und die Verkleidung bewegt wird. Diese Gefahr ist besonders groß, falls die Transportrolle angetrieben ist.

Aus dem US-Patent 6,000,529 ist ein Modularförderer zum Fördern von Lebensmitteln bekannt, bei dem unterhalb der Förderfläche eine Plastikbahn an seitlichen Rahmenteilen aufgehängt ist, um den Abfall aufzusammeln, der zwischen den Gliedern der Förderstrecke durchgefallen ist.

Der Erfindung liegt daher die Aufgabe zugrunde, eine Rollenbahn der gattungsgemäßen Art zu schaffen, die die vorstehend genannten Nachteile nicht aufweist.

Diese Aufgabe wird mit der Rollenbahn zum Transport von Gegenständen nach Anspruch 1 sowie mit der Kontrollstation zur Überprüfung von Gegenständen nach Anspruch 7 gelöst.

Bevorzugt erfolgt die Befestigung der Textilbahn durch eine Kombination aus Keder und Kederschiene. Dazu ist zumindest an einem seitlichen Längsträger, bevorzugt an belden Längsträgern, des Rahmens eine Kederschiene befestigt. Die Textilbahn weist entsprechende seitliche Keder auf, die jeweils in einer Kederschiene geführt sind. Bevorzugt ist die Textilbahn elastisch flexibel. Dadurch kann sie auch an schwer zugänglichen Stellen mit geringem Aufwand eingebaut werden und bildet eine zusätzliche Geräuschdämmung und Schwingungsdämpfung.

Falls die Textilbahn netzförmig gestaltet ist, so erhält sie eine größere mechanische Flexibilität. Eine geschlossene Textilbahn oder eine netzförmige Textilbahn mit geringer Maschengröße verhindert den Einblick in die darunterliegende Mechanik. Außerdem kann eine derartige Textilbahn bedruckt und so für Informations- und Werbezwecke genutzt werden. Durch seine elastische Flexibilität kann das Textilmaterial nachgeben, falls eine Person zwischen den Transportrollen durchgreift und mit der Hand zwischen die Textilbahn und die Transportrollen gerät. Somit ist eine Verletzungsgefahr ausgeschlossen.

Nachfolgend wird die Erfindung anhand eines vereinfacht dargestellten Ausführungsbeispiels beschrieben. Dabei zeigt
- Figur 1: eine perspektivische Ansicht von oben, und
- Figur 2: zeigt eine perspektivische Ansicht von unten auf eine Rollenbahn.

Die Rollenbahn 1 ist Bestandteil einer Kontrollstation zur Überprüfung von Gegenständen, insbesondere von Gepäckstücken die als Prüfgerät, ein Röntgenprüfgerät enthält. Derartige Kontrollstationen werden in Flughäfen eingesetzt, um das Gepäck der Passagiere auf unerlaubte Objekte zu überprüfen. Die Gegenstände, im Beispiel die Gepäckstücke, werden von der Rollenbahn 1 dem Prüfgerät zugeführt und/oder von diesem nach der Prüfung weggeführt.

Die Rollenbahn 1 besteht aus einer Reihe von achsparallel mit geringem Abstand voneinander angeordneten Transportrollen 2, die jeweils an ihren beiden Enden an seitlichen, sich in Transportrichtung erstreckenden Längsträgern 3 eines Rahmens gelagert sind.

Zumindest einige, bei einfachen Anwendungen alle Transportrollen 2 sind freilaufend gelagert. Für einen automatischen Transport der Gepäckstücke können einzelne oder mehrere Transportrollen 2 auch mit einem Drehantrieb verbunden sein.

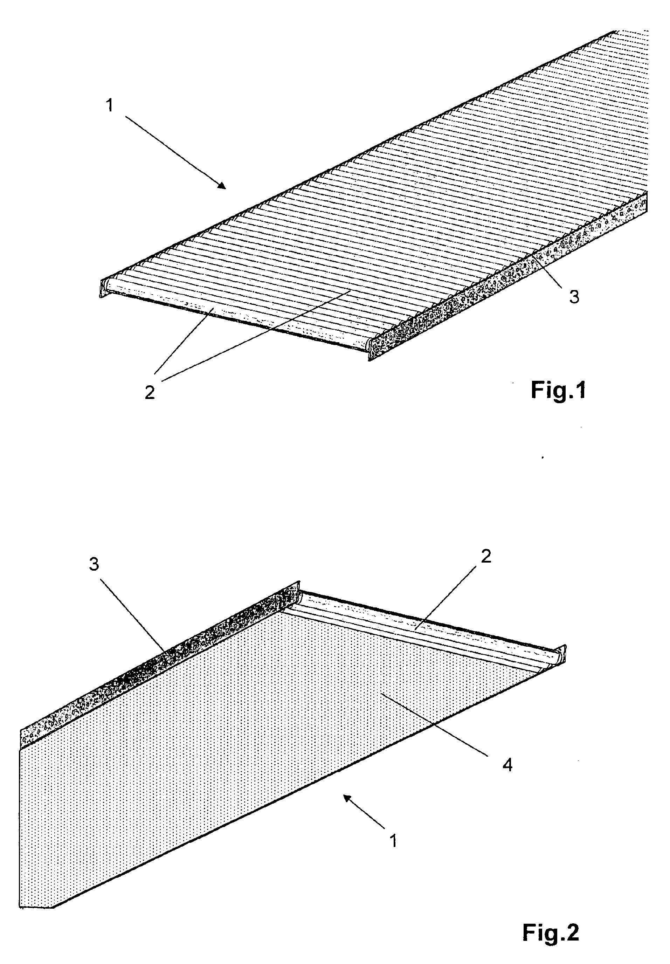

Unmittelbar unterhalb der Transportrollen 2 ist eine sich parallel zu der Transportfläche erstreckende Textilbahn 4 angeordnet, die an beiden Längsseiten an dem Rahmen befestigt ist. Wie in Figur 2 dargestellt, ist die Textilbahn an beiden Seiten an den Längsträgern 3 des Rahmens befestigt.

Bevorzugt erfolgt die Befestigung der Textilbahn 4 an dem Rahmen durch eine Kombination aus Keder und Kederschiene. Dazu ist an zumindest einem seitlichen Längsträger 3, bevorzugt an beiden Längsträgern 3, des Rahmens jeweils eine Kederschiene befestigt, und die Textilbahn 4 weist zumindest an einer Längsseite, bevorzugt an beiden Längsseiten, einen Keder auf, der in die zugehörige Kederschiene eingeführt ist. Über die Kederschiene-Keder-Verbindung lässt sich die Textilbahn 4 einfach an dem Rahmen befestigen und auch wieder von diesem lösen.

Bevorzugt ist die Textilbahn 4 aus einem elastisch flexiblen Material gefertigt, das nachgibt, falls eine Person zwischen den Transportrollen 2 hindurchgreift. Falls eine größere mechanische Flexibilität erforderlich ist, ist die Textilbahn 4 aus einem netzförmigen Material gefertigt. Ist die Textilbahn 4 geschlossen oder netzförmig mit geringer Maschengröße gefertigt, so kann sie vorteilhaft bedruckt und so für Informations- und Werbezwecke genutzt werden. Die Flexibilität des Textilmaterials ermöglicht es, die Textilbahn 4 als Verkleidung auch an schwer zugänglichen Stellen mit geringem Aufwand einzubauen. Zusätzlich wirkt sie geräuschdämmend und schwingungsdämpfend.

## Patentansprüche

1. Rollenbahn (1) zum Transport von Gegenständen, insbesondere von Gepäckstücken, mit einer Reihe von achsparallel mit Abstand voneinander angeordneten Transportrollen (2), die jeweils an ihren beiden Enden an seitlichen, sich In Transportrichtung erstreckenden Längsträgern eines Rahmens gelagert sind, **dadurch gekennzeichnet, dass**
unmittelbar unterhalb der Transportrollen (2) eine sich parallel zu der Transportfläche erstreckende Textilbahn (4) angeordnet ist, die an ihren beiden Längsseiten am Rahmen befestigt ist.

2. Rollenbahn (1) nach Anspruch 1, **dadurch gekennzeichnet, dass** zumindest einige Transportrollen (2) freilaufend gelagert sind.

3. Rollenbahn (1) nach Anspruch 1 oder 2, **dadurch gekennzeichnet, dass** an einem zumindest seitlichen Längsträger (3) des Rahmens eine Kederschiene befestigt ist, und die Textilbahn (4) zumindest einen seitlichen Keder aufweist, der in einer Kederschiene eingeführt ist.

4. Rollenbahn (1) nach Anspruch 3, **dadurch gekennzeichnet, dass** an beiden Längsträgern (3) jeweils eine Kederschiene befestigt ist und die Textilbahn (4) an beiden Längsseiten Keder aufweist.

5. Rollenbahn (1) nach einem der vorherigen Ansprüche, **dadurch gekennzeichnet, dass** die Textilbahn (4) elastisch flexibel ist.

6. Rollenbahn (1) nach Anspruch 5, **dadurch gekennzeichnet, dass** die Textilbahn (4) netzförmig gestaltet ist.

7. Kontrollstation zur Überprüfung von Gegenständen, insbesondere von Gepäckstücken, mit einem Prüfgerät und zumindest einer Rollenbahn (1), von der die Gegenstände dem Prüfgerät zugeführt oder von diesem weggeführt werden, **dadurch gekennzeichnet, dass** die Rollenbahn (1) gemäß einem der Patentansprüche 1 bis 6 gestaltet ist.

## Claims

1. Roller conveyor (1) for transporting items, in particular items of luggage, said roller conveyor having a series of transport rollers (2) which are arranged at a distance from each other in an axially parallel manner and at each of the two ends thereof are mounted on lateral longitudinal carriers of a frame that extend in the direction of transport, **characterized in that** a textile web (4), which extends parallel to the transport surface and is fastened to the frame on its two longitudinal sides, is arranged directly below the transport rollers (2).

2. Roller conveyor (1) according to Claim 1, **characterized in that** at least some of the transport rollers (2) are mounted so as to be free-wheeling.

3. Roller conveyor (1) according to Claim 1 or 2, **characterized in that** an edge reinforcement rail is fastened to at least one lateral longitudinal carrier (3) of the frame, and the textile web (4) includes at least one lateral edge reinforcement that is inserted in an edge reinforcement rail.

4. Roller conveyor (1) according to Claim 3, **characterized in that** an edge reinforcement rail is fastened to each of the two longitudinal carriers (3) and the textile web (4) includes edge reinforcement on both longitudinal sides.

5. Roller conveyor (1) according to one of the preceding claims, **characterized in that** the textile web (4) is elastically resilient.

6. Roller conveyor (1) according to Claim 5, **characterized in that** the textile web (4) is developed in a reticulated manner.

7. Control station for checking items, in particular items of luggage, said control station having a testing device and at least one roller conveyor (1), by means of which the items are supplied to the testing device or are guided away from said testing device, **characterized in that** the roller conveyor (1) is developed according to one of Claims 1 to 6.

## Revendications

1. Chemin de roulement (1) pour le transport d'objets, en particulier de bagages, comprenant une rangée de rouleaux de transport (2) disposés avec leurs axes parallèles à distance les uns des autres, lesquels sont supportés à chaque fois au niveau de leurs deux extrémités sur des supports longitudinaux latéraux d'un cadre s'étendant dans la direction de transport,
**caractérisé en ce que**
directement en dessous des rouleaux de transport (2) est disposée une bande textile (4) s'étendant parallèlement à la surface de transport, laquelle est fixée au cadre au niveau de ses deux côtés longitudinaux.

2. Chemin de roulement (1) selon la revendication 1, **caractérisé en ce qu'**au moins certains rouleaux de transport (2) sont supportés en roue libre.

3. Chemin de roulement (1) selon la revendication 1 ou 2, **caractérisé en ce qu'**un rail pour bourrelet est fixé au niveau d'un support longitudinal (3) au moins latéral du cadre, et la bande textile (4) présente au moins un bourrelet latéral qui est introduit dans un rail pour bourrelet.

4. Chemin de roulement (1) selon la revendication 3, **caractérisé en ce qu'**au niveau des deux supports longitudinaux (3) est fixé à chaque fois un rail pour bourrelet et la bande textile (4) présente des bourrelets au niveau des deux côtés longitudinaux.

5. Chemin de roulement (1) selon l'une quelconque des revendications précédentes, **caractérisé en ce que** la bande textile (4) est élastiquement flexible.

6. Chemin de roulement (1) selon la revendication 5, **caractérisé en ce que** la bande textile (4) est configurée en forme de filet.

7. Poste de contrôle pour contrôler des objets, en particulier des bagages, comprenant un appareil de contrôle et au moins un chemin de roulement (1), depuis lequel les objets sont acheminés à l'appareil de contrôle ou sont éloignés de celui-ci, **caractérisé en ce que** le chemin de roulement (1) est configuré selon l'une quelconque des revendications 1 à 6.
